# EUROPEAN PATENT APPLICATION

(11) **EP 4 725 759 A1**
(43) Date of publication of application: **15.04.2026**
(21) Application number: 25207775.5
(22) Date of filing: 09.10.2025
(51) Int. Cl.: B60N 2/28, B62B 9/14

(54) **CANOPY HEIGHT ADJUSTMENT MECHANISM AND CHILD SAFETY SEAT COMPRISING SAME**

(30) Priority: 11.10.2024 CN 202422459604 U
(71) Applicant: Ningbo Baby First Baby Products Co., Ltd., Ningbo, Zhejiang 315412 (CN)
(72) Inventor: ZHOU, Xiaolin, Ningbo, Zhejiang, 315412 (CN)
(74) Representative: Lorenz Seidler Gossel Part. mbB

(57) **Abstract**

Embodiments of the present invention relate to the technical field of child safety seats and provide a canopy height adjustment mechanism and a child safety seat including the same. The canopy height adjustment mechanism includes a canopy mounting member and a canopy. The canopy mounting member is configured to be mounted on a seat body. The canopy is slidably mounted to the canopy mounting member, to adjust a height of the canopy. After a headrest of the seat body is raised, the canopy may be slid relative to the canopy mounting member to adjust the height of the canopy accordingly, to prevent the canopy from interfering with the headrest during unfolding. Therefore, the canopy height adjustment mechanism ensures that the canopy can be normally unfolded after the height of the headrest is adjusted.

## Description

### TECHNICAL FIELD

The present invention relates to the technical field of child safety seats, and specifically to a canopy height adjustment mechanism and a child safety seat including the same.

### BACKGROUND

A canopy of a child safety seat can block sunlight from directly reaching a child occupant in the child safety seat.

In the prior art, as a child occupant grows taller with age, the height of the headrest of the child safety seat needs to be adjusted accordingly. However, the raised headrest will affect the normal unfolding of the canopy.

### SUMMARY

The present invention provides a canopy height adjustment mechanism and a child safety seat including the same to ensure that a canopy can be normally unfolded after the height of a headrest is adjusted.

Embodiments of the present invention may be implemented as follows.

In a first aspect, the present invention provides a canopy height adjustment mechanism, including
a canopy mounting member, where the canopy mounting member is configured to be mounted on a seat body; and
a canopy, where the canopy is slidably mounted to the canopy mounting member, to adjust a height of the canopy.

In an optional embodiment, a plurality of canopy mounting members are provided, and the canopy is slidably mounted to the plurality of canopy mounting members.

In an optional embodiment, the plurality of canopy mounting members include two canopy mounting members, the two canopy mounting members are spaced apart from each other, and the canopy is slidably mounted to the two canopy mounting members.

In an optional embodiment, the canopy mounting member includes a positioning block, and the positioning block is configured to press against the canopy when the canopy is slid to a preset position relative to the canopy mounting member.

In an optional embodiment, a plurality of positioning blocks are provided, and the plurality of positioning blocks are spaced apart from each other.

In an optional embodiment, the canopy mounting member includes a slide rail, the canopy is provided with a slide groove, and the slide rail is slidably engaged with the slide groove.

In an optional embodiment, the canopy includes a sunshade member, a first canopy rod, and a second canopy rod, the sunshade member is connected to the first canopy rod and the second canopy rod, and the first canopy rod is rotatably connected to the second canopy rod;
where the second canopy rod is slidably mounted to the canopy mounting member.

In an optional embodiment, the sunshade member is a sunshade cloth.

In a second aspect, the present invention provides a child safety seat, including a seat body and the canopy height adjustment mechanism according to any one of the above embodiments, where the canopy mounting member of the canopy height adjustment mechanism is mounted on the seat body.

In an optional embodiment, the seat body includes a seat back and a headrest, where the headrest is movably mounted to the seat back, and the canopy mounting member is mounted to the seat back.

The canopy height adjustment mechanism and the child safety seat of the embodiments of the present invention have the following advantages. For example,
the present invention provides a canopy height adjustment mechanism. The canopy height adjustment mechanism includes a canopy mounting member and a canopy. The canopy mounting member is configured to be mounted on a seat body. The canopy is slidably mounted to the canopy mounting member to adjust the height of the canopy. After a headrest of the seat body is raised, the canopy may be slid relative to the canopy mounting member to adjust the height of the canopy accordingly, to prevent the canopy from interfering with the headrest during unfolding. Therefore, the canopy height adjustment mechanism ensures that the canopy can be normally unfolded after the height of the headrest is adjusted.

The present invention provides a child safety seat, including a seat body and the canopy height adjustment mechanism described above. The canopy mounting member of the canopy height adjustment mechanism is mounted on the seat body. The child safety seat has all the functions of the canopy height adjustment mechanism described above.

### BRIEF DESCRIPTION OF THE DRAWINGS

To describe the technical solutions of the embodiments of the present invention more clearly, the following briefly introduces the accompanying drawings required for describing the embodiments. It can be understood that the accompanying drawings in the following description show only some embodiments of the present invention and should not be construed as limiting of the scope of the present invention, and those having ordinary skills in the art may still derive other related drawings from these accompanying drawings without creative efforts.
FIG. 1 is an exploded view of a child safety seat according to an embodiment of the present invention.
FIG. 2 is a schematic view of a canopy mounting member according to an embodiment of the present invention.
FIG. 3 is a schematic view of a child safety seat according to an embodiment of the present invention when viewed from a first viewing angle, where a headrest is in an initial state and a canopy is in an initial state.
FIG. 4 is a schematic view of a child safety seat according to an embodiment of the present invention when viewed from a second viewing angle, where a headrest is in an initial state and a canopy is in an initial state.
FIG. 5 is a partially enlarged view of FIG. 4.
FIG. 6 is a schematic view of a child safety seat according to an embodiment of the present invention when viewed from a first viewing angle, where a headrest is in a raised state and a canopy is in an initial state.
FIG. 7 is a schematic view of a child safety seat according to an embodiment of the present invention when viewed from a second viewing angle, where a headrest is in a raised state and a canopy is in an initial state.
FIG. 8 is a schematic view of a child safety seat according to an embodiment of the present invention when viewed from a first viewing angle, where a headrest is in a raised state and interferes with a canopy.
FIG. 9 is a schematic view of a child safety seat according to an embodiment of the present invention when viewed from a second viewing angle, where a headrest is in a raised state and interferes with a canopy.
FIG. 10 is a schematic view of a child safety seat according to an embodiment of the present invention when viewed from a first viewing angle, where a headrest is in a raised state and a canopy is in a raised state.
FIG. 11 is a schematic view of a child safety seat according to an embodiment of the present invention when viewed from a second viewing angle, where a headrest is in a raised state and a canopy is in a raised state.
FIG. 12 is a schematic view of a child safety seat according to an embodiment of the present invention when viewed from a first viewing angle, where a headrest is in a raised state and a canopy is partially unfolded.
FIG. 13 is a schematic view of a child safety seat according to an embodiment of the present invention when viewed from a second viewing angle, where a headrest is in a raised state and a canopy is partially unfolded.
FIG. 14 is a schematic view of a child safety seat according to an embodiment of the present invention when viewed from a first viewing angle, where a headrest is in a raised state and a canopy is fully unfolded.
FIG. 15 is a schematic view of a child safety seat according to an embodiment of the present invention when viewed from a second viewing angle, where a headrest is in a raised state and a canopy is fully unfolded.
FIG. 16 is a partial enlarged view of FIG. 15.

In the drawings, the reference signs respectively represent: 100 - canopy mounting member; 110 - slide rail; 111 - positioning block; 200 - canopy; 210 - first canopy rod; 220 - second canopy rod; 1110 - seat back; 1120 - headrest.

### DETAILED DESCRIPTION OF THE EMBODIMENTS

To make the objectives, technical solutions and advantages of the embodiments of the present invention clearer, the technical solutions in the embodiments of the present invention will be described clearly and thoroughly with reference to the accompanying drawings in the embodiments of the present invention. Apparently, the embodiments described are merely some embodiments, rather than all of the embodiments of the present invention. The components of the embodiments of the present invention described and illustrated in the accompanying drawings herein may generally be arranged and designed in a variety of different configurations.

Therefore, the following detailed description of the embodiments of the present invention provided in the accompanying drawings is not intended to limit the scope of the present invention, but merely represents selected embodiments of the present invention. All other embodiments obtained by those having ordinary skills in the art without creative efforts based on the embodiments of the present invention shall fall within the protection scope of the present invention.

It should be noted that like numerals and letters denote like terms in the following drawings. Therefore, once an item is defined in one accompanying drawing, the item does not need to be further defined and explained in the subsequent accompanying drawings.

In the description of the embodiments of the present invention, it should be noted that the orientation or positional relationships indicated by the terms "up", "down", "inside", "outside", etc. are based on the orientation or positional relationships shown in the drawings or the usual orientation or positional relationships of the product of the present invention during use, and are only for the convenience of describing the embodiments of the present invention and simplifying the description, rather than indicating or implying that the apparatus or element described must have a specific orientation or be constructed and operated in a specific orientation, and therefore are not to be construed as limiting the present invention.

In addition, the terms "first" and "second" are merely used to distinguish the described objects, and are not intended to indicate or imply relative importance.

It should be noted that the features in the embodiments of the present invention may be combined with each other without conflict.

As consumer spending rises, more and more parents not only pay attention to the safety of child safety seats, but also start to pay special attention to the comfort of child safety seats.

For example, with the popularity of new energy vehicles with a panoramic sunroof design, a child safety seat equipped with a canopy has become a must-have for parents who want to drive with children in hot summer, because the canopy of the child safety seat can block sunlight from directly reaching a child occupant in the child safety seat.

Canopies of child safety seats in the prior art are generally suitable for newborns and infants, but are not suitable for children who have grown to a certain height.

Specifically, canopies of child safety seats in the prior art are of a fixed type, i.e., the height of the canopy cannot be adjusted. As a child occupant grows taller with age, the height of the headrest of the child safety seat needs to be adjusted accordingly. As a result, a forward rotation of a bracket of the canopy will be interfered by the headrest, and consequently the raised headrest will affect the normal unfolding of the canopy.

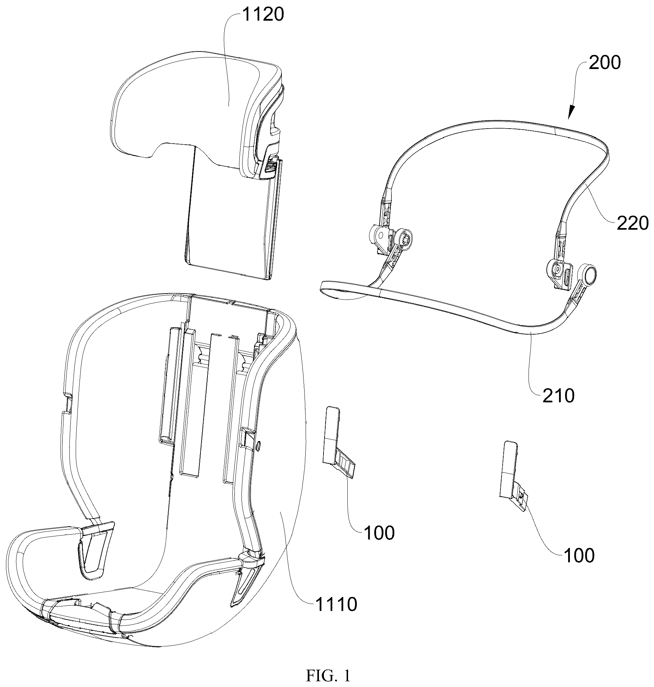

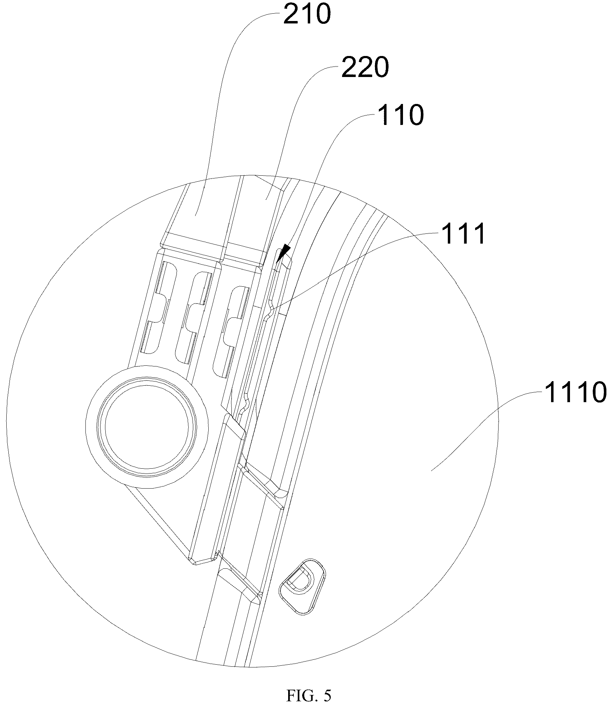

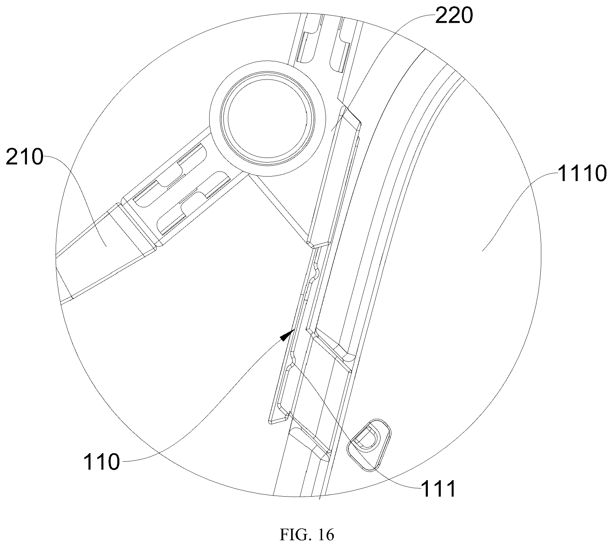

To solve this problem, referring to FIG. 1 to FIG. 16, embodiments of the present invention provide a canopy height adjustment mechanism and a child safety seat including the same, which will be described in detail below.

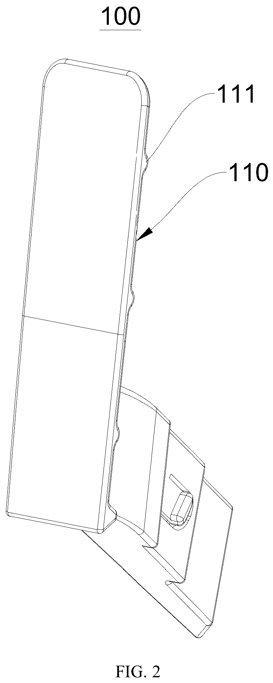

Referring to FIG. 1 and FIG. 2, an embodiment of the present invention provides a child safety seat, which includes a seat body and a canopy height adjustment mechanism. A canopy mounting member 100 (which will be described in detail below) of the canopy height adjustment mechanism is mounted on the seat body. The canopy height adjustment mechanism can realize the adjustment of the height of a canopy 200 to ensure that the canopy 200 can be normally unfolded after the height of a headrest 1120 is adjusted.

Specifically, in this embodiment, the seat body includes a seat back 1110 and a headrest 1120. The headrest 1120 is movably mounted to the seat back 1110. For example, the headrest 1120 is slidably mounted to the seat back 1110, so that the height of the headrest 1120 can be adjusted. The canopy height adjustment mechanism includes a canopy mounting member 100 and a canopy 200. The canopy mounting member 100 is configured to be mounted on the seat body. The canopy 200 is slidably mounted to the canopy mounting member 100 to adjust a height of the canopy 200. The canopy mounting member 100 is mounted to the seat back 1110 of the seat body.

After the headrest 1120 of the seat body is raised, the canopy 200 may be slid relative to the canopy mounting member 100 to adjust the height of the canopy 200 accordingly, i.e., the canopy 200 may be raised, to prevent the canopy 200 from interfering with the headrest 1120 during unfolding. Therefore, the canopy height adjustment mechanism ensures that the canopy 200 can be normally unfolded after the height of the headrest 1120 is adjusted.

It should be noted that in this embodiment, the canopy mounting member 100 and the seat back 1110 may be implemented as separate components. In some embodiments, the canopy mounting member 100 and the seat back 1110 may be integrally formed.

A plurality of canopy mounting members 100 may be provided, and the canopy 200 is slidably mounted to the plurality of canopy mounting members 100. The term "a plurality of" herein means two or more. For example, the number of the canopy mounting members 100 may be two, three, four, and so on.

In this embodiment, two canopy mounting members 100 are provided, the two canopy mounting members 100 are spaced apart from each other, a second canopy rod 220 (which will be described in detail below) of the canopy 200 is slidably mounted to the two canopy mounting members 100, and the two canopy mounting members 100 are mounted on two sides of the seat back 1110.

It should be noted that in this embodiment, the canopy 200 includes a sunshade member, a first canopy rod 210, and a second canopy rod 220. The sunshade member may be a sunshade cloth. The sunshade member is connected to the first canopy rod 210 and the second canopy rod 220. The first canopy rod 210 is rotatably connected to the second canopy rod 220. Specifically, the first canopy rod 210 may be connected to the second canopy rod 220 by a pin shaft, allowing the first canopy rod 210 to rotate relative to the second canopy rod 220. The second canopy rod 220 is slidably mounted to the canopy mounting member 100.

It can be easily understood that in order to unfold the canopy 200, the first canopy rod 210 is rotated relative to the second canopy rod 220 to drive the sunshade member to be unfolded, thereby achieving the sunshade function of the canopy 200.

Specifically, referring to FIG. 2, FIG. 5, and FIG. 16, to facilitate the sliding of the canopy 200 relative to the canopy mounting member 100, the canopy mounting member 100 includes a slide rail 110, the second canopy rod 220 of the canopy 200 is provided with a slide groove (not shown), and the slide rail 110 is configured to slidably engage with the slide groove to facilitate the adjustment of the height of the canopy 200.

It should be noted that a length of the slide rail 110 may be determined according to an actual situation. For example, the length of the slide rail 110 may be determined according to a height of an older child occupant. The taller the older child occupant, the longer the length of the slide rail 110. As such, after the headrest 1120 is raised, the canopy 200 can be raised accordingly, to prevent the unfolding of the canopy 200 from being interfered by the headrest 1120.

To maintain the canopy 200 at a height position to which the canopy 200 has been raised, a positioning block 111 is provided on the slide rail 110 of the canopy mounting member 100. The positioning block 111 is configured to press against the slide groove on the second canopy rod 220 of the canopy 200 when the canopy 200 slides to a preset position relative to the canopy mounting member 100, to limit the relative sliding between the slide rail 110 of the canopy mounting member 100 and the second canopy rod 220, thereby maintaining the canopy 200 at the height position.

The preset position may be construed as a height position to which the canopy 200 is raised according to an actual situation to prevent the unfolding of the canopy 200 from being interfered by the headrest 1120.

Definitely, in order to maintain the canopy 200 at different height positions as required, a plurality of positioning blocks 111 are provided in this embodiment. The plurality of positioning blocks 111 are spaced part from each other. Each of the positioning blocks 111 has a different height. For example, the number of positioning blocks 111 may be two, three, four, etc.

The working principle of the child safety seat provided in this embodiment is as follows.

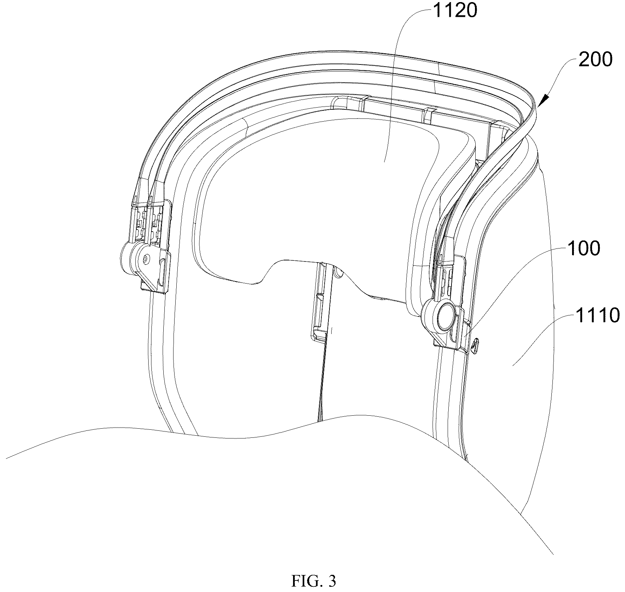

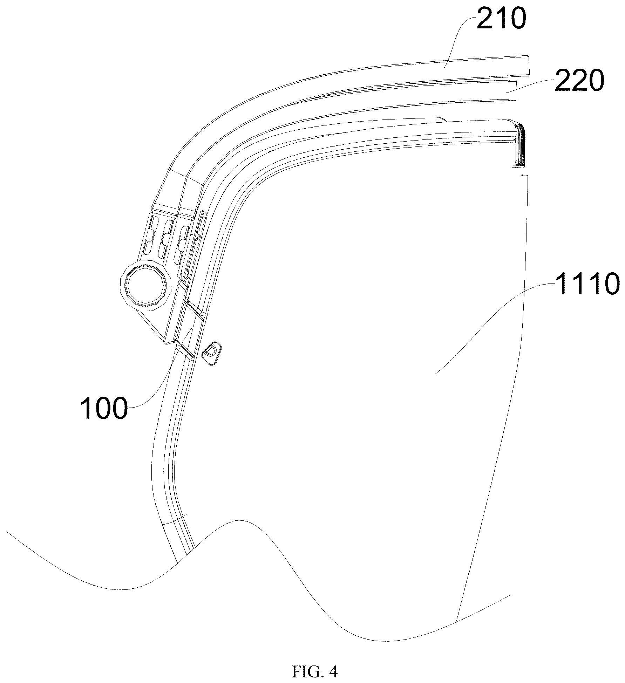

As shown in FIG. 3 and FIG. 4, neither the headrest 1120 nor the canopy 200 of the child safety seat is raised, i.e., the headrest 1120 is in an initial state, the canopy 200 is in an initial state, and the canopy 200 can be normally unfolded. The child safety seat in this state is suitable for a younger child occupant.

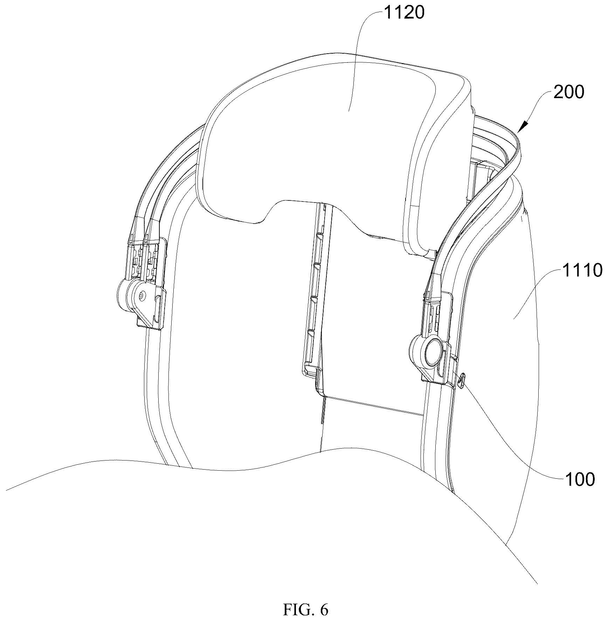

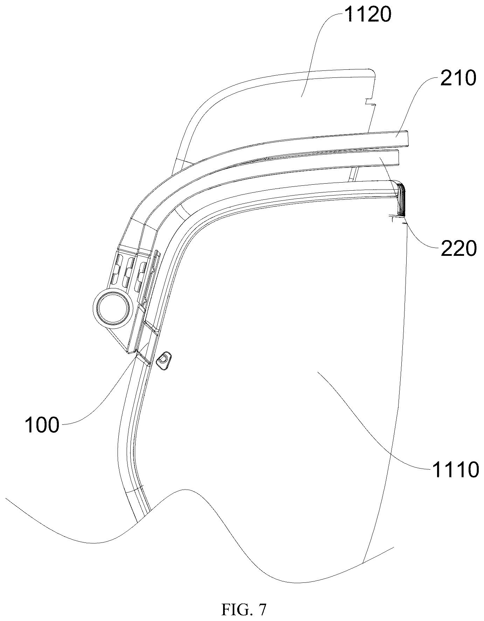

As shown in FIG. 6 and FIG. 7, as a child occupant grows taller with age, the headrest 1120 needs to be slid relative to the seat back 1110 to raise the headrest 1120, so that the headrest 1120 enters a raised state, to adapt to an older child occupant.

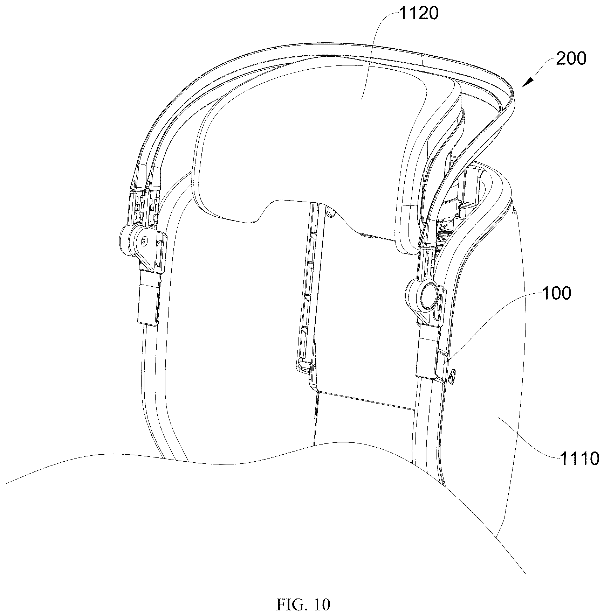

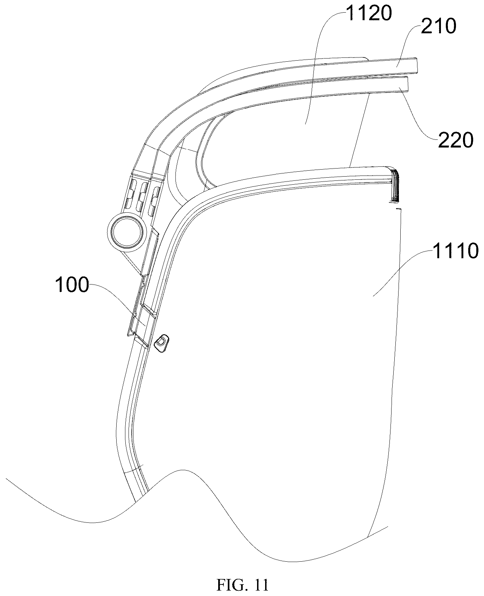

Referring to FIG. 10 and FIG. 11, in order to prevent the unfolding of the canopy 200 from being interfered, the height of the canopy 200 is also adjusted, so that the canopy 200 also enters a raised state. Specifically, the second canopy rod 220 of the canopy 200 is slid relative to the slide rail 110 of the canopy mounting member 100 to raise the canopy 200, until the positioning block 111 presses against the second canopy rod 220. Thus, the canopy 200 is maintained at the current height position.

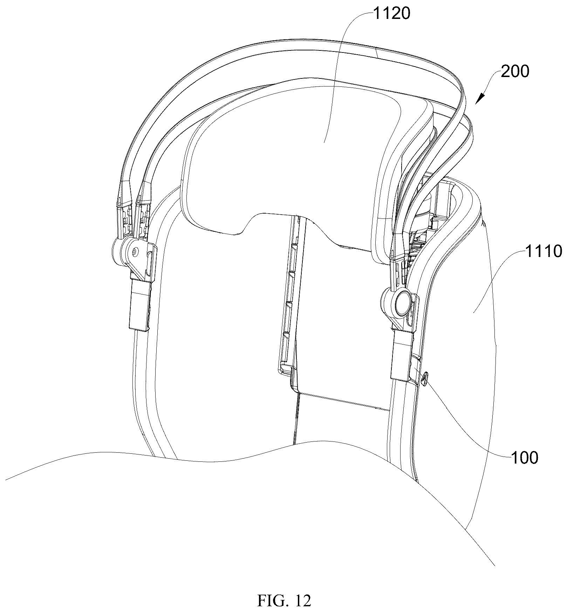

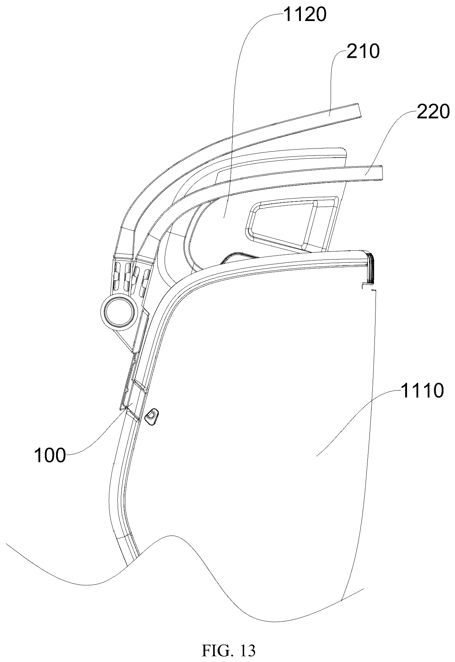

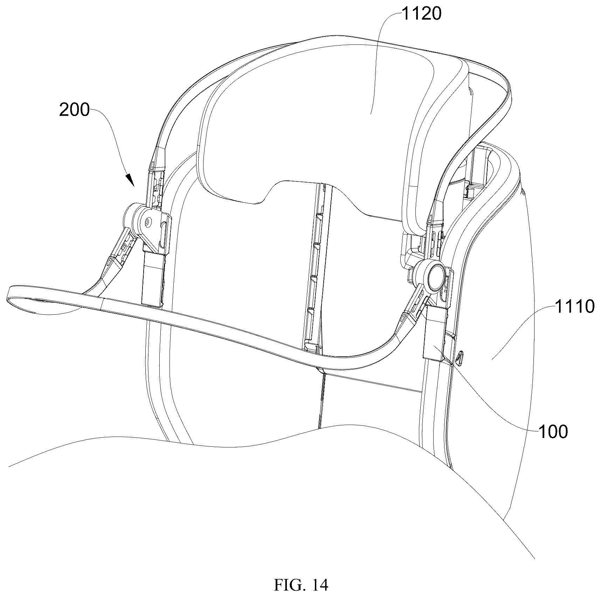

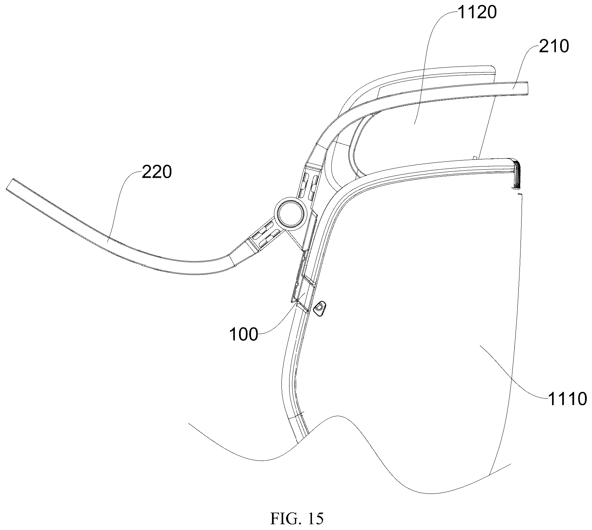

Next, referring to FIG. 12 and FIG. 13, the first canopy rod 210 starts to rotate relative to the second canopy rod 220. Referring to FIG. 14 and FIG. 15, the first canopy rod 210 continues to rotate relative to the second canopy rod 220, until the unfolding of the canopy 200 is completed. Because the canopy 200 has been raised, the first canopy rod 210 does not interfere with the headrest 1120 when rotating relative to the second canopy rod 220. As such, the child safety seat can still provide the sunshade function for an older child occupant.

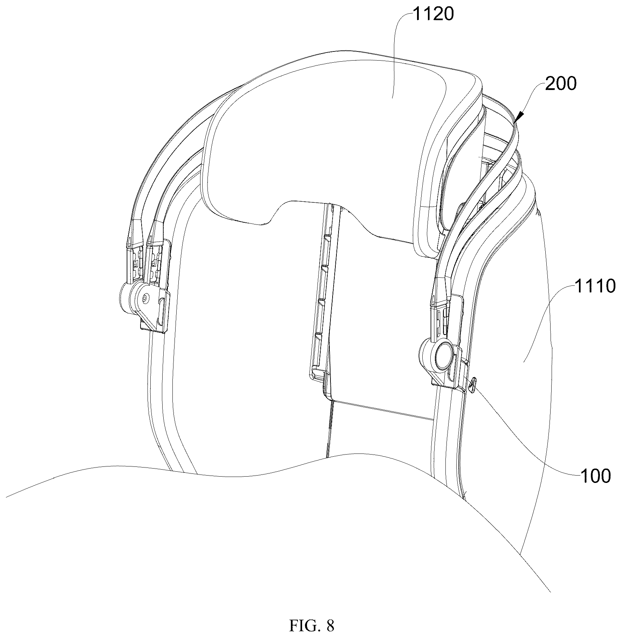

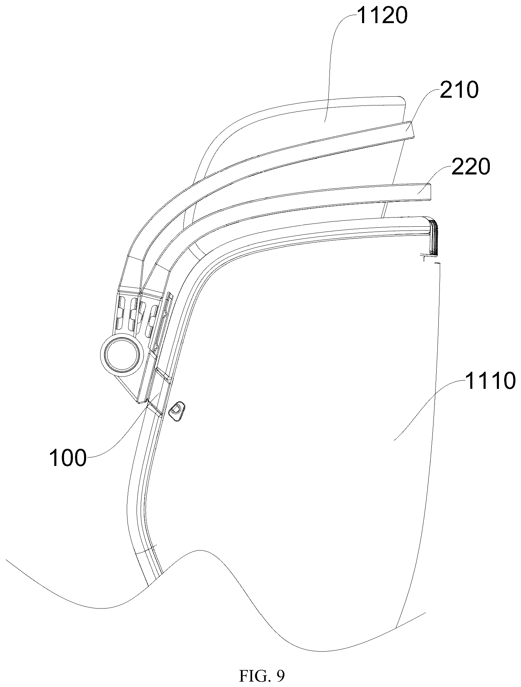

It should also be noted that referring to FIG. 8 and FIG. 9, as a child occupant grows taller with age, the headrest 1120 needs to be slid relative to the seat back 1110 to raise the headrest 1120, to adapt to an older child occupant. However, if the canopy 200 is still kept at the initial height position (equivalent to a case in the prior art where the canopy 200 is in a fixed state and the height of the canopy 200 cannot be adjusted), the first canopy rod 210 of the canopy 200 interferes with the headrest 1120 when rotating relative to the second canopy rod 220.

In other words, for child safety seats in the prior art, the height of the canopy is not adjustable, and once the height of the headrest is adjusted, the unfolding of the canopy will be interfered by the headrest, and the canopy cannot provide the sunshade function.

Based on the above, the canopy height adjustment mechanism includes a canopy mounting member 100 and a canopy 200. The canopy mounting member 100 is configured to be mounted on a seat body. The canopy 200 is slidably mounted to the canopy mounting member 100 to adjust a height of the canopy 200.

After the headrest 1120 of the seat body is raised, the canopy 200 may be slid relative to the canopy mounting member 100 to adjust the height of the canopy 200 accordingly, to prevent the canopy 200 from interfering with the headrest 1120 during unfolding. Therefore, the canopy height adjustment mechanism ensures that the canopy 200 can be normally unfolded after the height of the headrest 1120 is adjusted.

The child safety seat includes a seat body and the canopy height adjustment mechanism described above. The canopy mounting member 100 of the canopy height adjustment mechanism is mounted on the seat body. The child safety seat has all the functions of the canopy height adjustment mechanism described above.

In addition, the canopy 200 on the child safety seat can provide a sunshade function for children of all ages, i.e., the height of the canopy can be adjusted as a child occupant grows taller, so that the child safety seat can be used for both older children and newborns, thereby greatly prolonging the service life of the canopy on the child safety seat.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A canopy height adjustment mechanism, **characterized by** comprising:
a canopy mounting member (100), wherein the canopy mounting member (100) is configured to be mounted on a seat body; and
a canopy (200), wherein the canopy (200) is slidably mounted to the canopy mounting member (100), to adjust a height of the canopy (200).

2. The canopy height adjustment mechanism according to claim 1, **characterized in that** a plurality of canopy mounting members (100) are provided, and the canopy (200) is slidably mounted to the plurality of canopy mounting members (100).

3. The canopy height adjustment mechanism according to claim 2, **characterized in that** the plurality of canopy mounting members (100) comprise two canopy mounting members (100), the two canopy mounting members (100) are spaced apart from each other, and the canopy (200) is slidably mounted to the two canopy mounting members (100).

4. The canopy height adjustment mechanism according to claim 1, **characterized in that** the canopy mounting member (100) comprises a positioning block (111), and the positioning block (111) is configured to press against the canopy (200) when the canopy (200) is slid to a preset position relative to the canopy mounting member (100).

5. The canopy height adjustment mechanism according to claim 4, **characterized in that** a plurality of positioning blocks (111) are provided, and the plurality of positioning blocks (111) are spaced apart from each other.

6. The canopy height adjustment mechanism according to claim 1, **characterized in that** the canopy mounting member (100) comprises a slide rail (110), the canopy (200) is provided with a slide groove, and the slide rail (110) is slidably engaged with the slide groove.

7. The canopy height adjustment mechanism according to claim 1, **characterized in that** the canopy (200) comprises a sunshade member, a first canopy rod (210), and a second canopy rod (220), the sunshade member is connected to the first canopy rod (210) and the second canopy rod (220), and the first canopy rod (210) is rotatably connected to the second canopy rod (220); wherein the second canopy rod (220) is slidably mounted to the canopy mounting member (100).

8. The canopy height adjustment mechanism according to claim 7, **characterized in that** the sunshade member is a sunshade cloth.

9. A child safety seat, **characterized by** comprising a seat body and the canopy height adjustment mechanism according to any one of claims 1 to 8, wherein the canopy mounting member (100) of the canopy height adjustment mechanism is mounted on the seat body.

10. The child safety seat according to claim 9, **characterized in that** the seat body comprises a seat back (1110) and a headrest (1120), wherein the headrest (1120) is movably mounted to the seat back (1110), and the canopy mounting member (100) is mounted to the seat back (1110).
